# EUROPEAN PATENT SPECIFICATION

(11) **EP 4 215 864 B1**
(45) Date of publication and mention of the grant of the patent: **02.12.2026**
(21) Application number: 23152946.2
(22) Date of filing: 23.01.2023
(51) Int. Cl.: F28F 9/02

(54) **HEAT EXCHANGER HEADER STRUCTURES**
WÄRMETAUSCHERSAMMELROHRSTRUKTUREN
STRUCTURES DE COLLECTEUR D'ÉCHANGEUR DE CHALEUR

(30) Priority: 21.01.2022 US 202217581571
(43) Date of publication of application: 26.07.2023
(73) Proprietor: Hamilton Sundstrand Corporation, Charlotte, NC 28217 (US)
(72) Inventor: KIRSCH, Kathryn L., East Haddam, 06423 (US); DOLD, Robert H., Monson, 01057 (US); ATTRIDGE, Paul, Colchester, 06415 (US); CADAR, Alexandru, Eastford, 06242 (US)
(74) Representative: Dehns

(56) References cited:
- EP-A1- 0 040 748
- EP-A1- 3 705 828
- EP-A1- 3 825 638
- EP-A1- 4 166 888
- EP-B1- 2 570 749
- US-A1- 2017 328 644
- US-B2- 8 181 943

## Description

### FIELD

This disclosure relates to heat exchangers, e.g., for aerospace applications. A heat exchanger according to the preamble of claim 1 is known from document EP2570749B1.

### BACKGROUND

Heat exchangers are central to numerous systems in engines and power cycles. Applications such as recuperators and waste heat recovery heat exchangers continually require increases in heat transfer performance, reductions in pressure loss, and reductions in size and weight. Furthermore, the operating pressures and temperatures of these heat exchangers become more demanding as the target system efficiency is increased.

Designing these heat exchangers to survive these high temperature and ultra-high pressure conditions while keeping the heat exchangers compact is challenging. Furthermore, integrating these compact heat exchangers within a given system requires connecting the heat exchanger core, which can contain hundreds to thousands of channels, to external plumbing, which generally demands intricate header topologies that must withstand the ultra-high operating pressure of the cycle. Additive manufacturing (AM) offers an ability to create such topologies, but further constraining the design by buildability adds an extra layer of complexity.

Such conventional methods and systems have generally been considered satisfactory for their intended purpose. However, there is still a need in the art for improved heat exchanger headers. The present disclosure provides a solution for this need.

### SUMMARY

According to a first aspect of the present invention, there is provided a heat exchanger header as set forth in claim 1.

The plurality of second channels can be two or more second channels. Each channel can have a second channel opening in fluid communication with the dome cavity.

In certain embodiments, the plurality of second channels includes nine second channels. Each second channel can extend from the body and become parallel with the other second channels. The nine second channels can be arranged in a three by three square. In certain embodiments, each second opening can define a center axis that is coincident with a center point of the dome cavity.

The one or more transition structures can be and/or include any suitable transition structure disclosed herein, e.g., as described above. In certain embodiments, the one or more transition structures can include a plurality of transition structures. In certain embodiments, the plurality of transition structures can include a plurality of successive transition structures of reducing size toward a core direction. For example, a dome cavity of a smaller transition structure can be in fluid communication with one of a respective second channel of a larger transition structure.

According to a further aspect of the present invention, there is provided a method for additively manufacturing a heat exchanger as set forth in claim 9.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a is a perspective view of an embodiment of a transition structure in accordance with this disclosure, showing a dome cavity side;
Fig. 2 is another perspective view of the embodiment of Fig. 1, showing a second channel side;
Fig. 3 is a partial perspective view of an embodiment of a header for a heat exchanger in accordance with this disclosure, showing locations where embodiments of a transition structure can be located; and
Fig. 4 is a partial cross-sectional view of an embodiment of header in accordance with this disclosure, showing the location of transition structures in accordance with this disclosure; and
Fig. 5 is a elevation view of the embodiment of Fig, 1.

### DETAILED DESCRIPTION

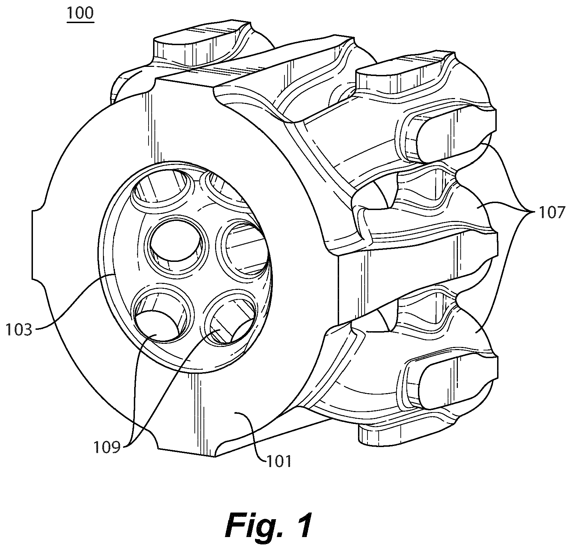

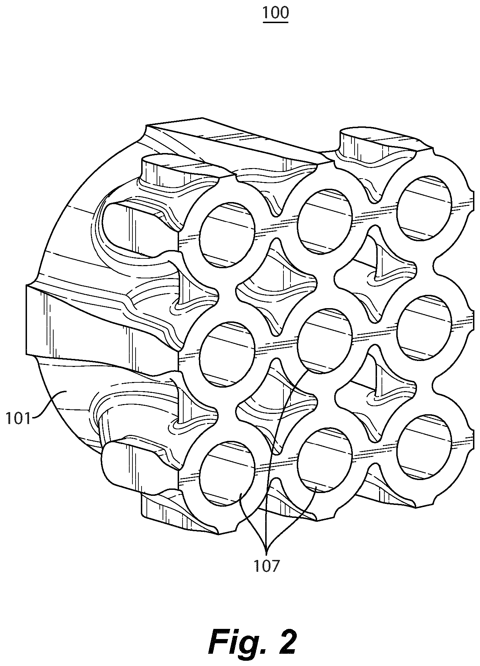

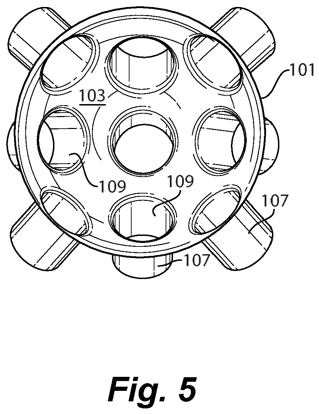

Reference will now be made to the drawings wherein like reference numerals identify similar structural features or aspects of the subject disclosure. For purposes of explanation and illustration, and not limitation, an illustrative view of an embodiment of a transition structure in accordance with the disclosure is shown in Fig. 1 and is designated generally by reference character 100. Other embodiments and/or aspects of this disclosure are shown in Figs. 2-5. Certain embodiments described herein can be used to provide efficient and strong heat exchanger headers for high pressure applications.

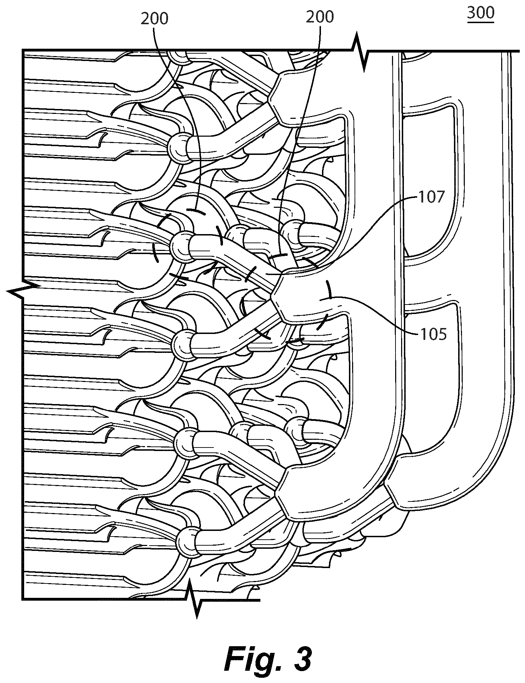

Referring to Figs. 1 and 2, a transition structure 100 for a heat exchanger (not shown) includes a body 101 defining a dome cavity 103. The dome cavity 103 is hemispherical (e.g., as shown in Figs. 1, 2, 4, and 5). Referring additionally to Fig. 3, the dome cavity 103 can be configured to transition flow between at least one first channel 105 and a plurality of second channels 107 having a different number than the at least one first channel 105.

The at least one first channel 105 can be a single first channel 105 in fluid communication with the dome cavity 103. The single first channel 105 can have an inner diameter that is the same as the diameter of the dome cavity 103. Any other suitable relative diameter and/or shape between the first channel 105 and the dome cavity 103 is contemplated herein.

The plurality of second channels 107 can be two or more second channels 107. Each channel 107 can have a second channel opening 109 in fluid communication with the dome cavity 103.

In certain embodiments, the plurality of second channels 107 can include nine second channels 107. Any suitable number of second channels 107 is contemplated herein. As shown in Fig. 3, the transition structures 200 can include four second channels, for example. Transition structure 200 can be otherwise similar to structure 100, for example.

Each second channel 107 can extend from the body 101 and become parallel with the other second channels 107 (e.g., as shown in Fig. 2). The second channels 107 can extend from the dome cavity at one or more angles and bend back to be parallel, for example. In certain embodiments, the second channels 107 can be limited to be no more than about 40 to 45 degrees to be self-supporting in build during additive manufacturing. For example, the build direction can be parallel with the centerline axes of the second channels, e.g., as shown. Any suitable number is contemplated. Any other suitable method of manufacturing is contemplated herein (e.g., lost wax casting or any other suitable method).

The nine second channels 107 can be arranged in a three by three square (e.g., as shown in Fig. 2). In certain embodiments, each second opening 109 can define a center axis (e.g., orthogonal to the plane defining the opening 109) that is coincident with a center point (e.g., such that all normal lines of each opening 109 extend through a center point of the theoretical full sphere from which the hemisphere comes) of the dome cavity 103. Any other suitable relationship between one or more center axes of the second openings 109 and the center point of the dome cavity 103 is contemplated herein.

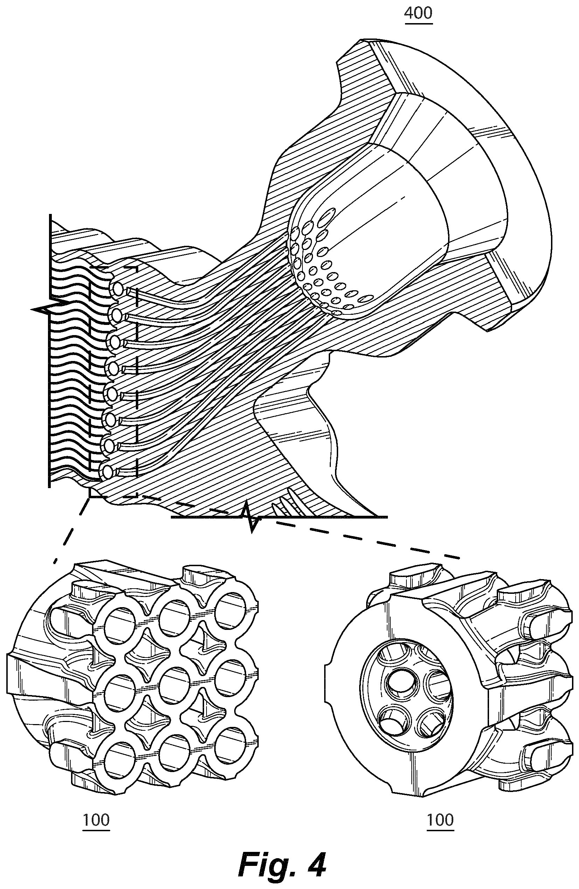

In accordance with at least one aspect of this disclosure, as shown in Figs. 3 and 4, a heat exchanger header 300, 400 can include one or more transition structures. The one or more transition structures can be and/or include any suitable transition structure disclosed herein, e.g., structure 100 as described above. In certain embodiments, the one or more transition structures 100 can include a plurality of transition structures 100. In certain embodiments, the plurality of transition structures 100 can include a plurality of successive transition structures 100 of reducing size toward a core direction. For example, a dome cavity 103 of a smaller transition structure can be in fluid communication with one of a respective second channel of a larger transition structure. Embodiments of a header can include any suitable number of sub-divisions to transition from an inlet/outlet into the suitable number of core channels.

In accordance with at least one aspect of this disclosure, a method for additively manufacturing a heat exchanger can include building a transition structure comprising a body 101 defining a dome cavity 103 that is configured to transition flow between at least one first channel 105 and a plurality of second channels 107 having a different number than the at least one first channel 105. The transition structure can be and/or include any suitable transition structure disclosed herein, e.g., structure 100 as described above. Building the transition structure 100 can include building the dome cavity 103 such that a vertical build direction is parallel with a center axis of the dome cavity 103 and/or aligned with each second channel 107 to build the transition structure 100 without support structure. The method can include any other suitable method(s) and/or portion(s) thereof. Any other suitable method to make one or more embodiments of this disclosure is contemplated herein.

The invention uses hemispherical shape in transition portions to handle high stresses with thinner walls. Stress in high pressure can be well distributed in the embodiment of a structure 100. The spacing of openings 109 apart from each other can be spaced out evenly so stresses are substantially the same throughout the cavity 103.

By providing a stronger structure, the weight of the overall heat exchanger can be reduced. In certain embodiments, each step down from larger flow channels to multiple smaller flow channels, the walls can be thinner. Embodiments also promote even flow to all the second channels or vice versa. The direction of flow can be either way and embodiments can provide a strong transition. In certain embodiments, the dome cavity can be positioned in the direction of flow. Embodiments can be built using additive manufacturing without support structure.

Embodiments can include an integrated heat exchanger header for ultra-high pressure operation with a modular design that provides a low-stress option for transitioning the flow from one channel into many (or vice versa). The invention uses a hemispherical shape to minimize pressure stresses due to the high pressure at flow transitions. For example, flow from one branch can enter a hemisphere from which several smaller channels emanate. Embodiments can include one flow path splits into nine channels for example. Alternatively, the flow can enter the nine smaller channels and converge to one flow path. Any other suitable number of channels are contemplated herein.

The diameter of the sphere can be modified to accommodate any number of splits. For example, the flow path can be split into four channels at two locations in the heat exchanger header, e.g., as shown in Fig. 3. Embodiments of a hemispherical transition can be easily scaled to create modular, fractal-like flow paths that continue to split one flow path into many in a way that ensures stress from ultra-high pressure operation remains low.

Embodiments can offer an integrated header design that seamlessly transitions between heat exchanger core and external system plumbing, survives an ultra-high pressure environment, and can be additively manufactured without internal supports. Embodiments can enable a modular, hemispherical transition path for ultra-high pressure fluid to split or converge while traveling through an additively manufactured heat exchanger. The flow can easily split into many smaller paths by way of hemispherical features. Alternatively, the flow can converge from multiple paths into one through the same feature, for example. Where previous designs for headers have relied on the merging and splitting of channels, often in discrete, stacked layers, to connect external plumbing to heat exchanger cores, embodiments can route circular paths through hemispherical transition paths such that stresses from ultra-high pressure loads remain low. As such, the resulting header performs well in ultra-high pressure applications. Furthermore, embodiments can be additively manufactured without the need for internal supports. Embodiments can inherently allow for patterning of the feature, which eases the CAD burden inherent in connecting hundreds to thousands of channels to one inlet or outlet. The cylindrical and spherical geometry can also be less computational intensive for the CAD program than current lofted designs, reducing file size and improving CAD rebuild times.

## Claims

1. A heat exchanger header (300; 400) comprising a transition structure (100; 200), the transition structure (100; 200) comprising:
at least one first channel (105);
a plurality of second channels (107) having a different number than the at least one first channel (105); and
a body (101) defining a dome cavity (103) that is configured to transition flow between the at least one first channel (105) and the plurality of second channels (107), wherein the at least one first channel is a single first channel (105) in fluid communication with the dome cavity (103), and the single first channel (105) has an inner diameter that is the same as the diameter of the dome cavity (103),
**characterised in that** the dome cavity (103) is hemispherical.

2. The header (300; 400) of claim 1, wherein the plurality of second channels is two or more second channels (107), each channel (107) having a second channel opening (109) in fluid communication with the dome cavity (103).

3. The header (300; 400) of claim 2, wherein the plurality of second channels (107) includes nine second channels (107).

4. The header (300; 400) of claim 3, wherein the nine second channels (107) are arranged in a three by three square.

5. The header (300; 400) of any of claims 2 to 4, wherein each second channel (107) extends from the body (101) and becomes parallel with the other second channels (107).

6. The header (300; 400) of any of claims 2 to 5, wherein each second channel opening (109) defines a center axis that is coincident with a center point of the dome cavity (103).

7. The header (300; 400) of any preceding claim, wherein the transition structure includes a plurality of transition structures (100; 200).

8. The header (300; 400) of claim 7, wherein the plurality of transition structures (100; 200) includes a plurality of successive transition structures (100; 200) of reducing size toward a core direction, wherein a dome cavity (103) of a smaller transition structure is in fluid communication with one of the respective second channels (107) of a larger transition structure.

9. A method for additively manufacturing a heat exchanger header (300; 400) comprising a transition structure (100; 200), the method comprising:
building the transition structure (100; 200) comprising a body (101) defining a dome cavity (103) that is configured to transition flow between at least one first channel (105) and a plurality of second channels (107) having a different number than the at least one first channel (105),
**characterised in that**:
the dome cavity (103) is hemispherical, the at least one first channel is a single first channel (105) in fluid communication with the dome cavity (103), and the single first channel (105) has an inner diameter that is the same as the diameter of the dome cavity (103).

10. The method of claim 9, wherein building the transition structure (100; 200) includes building the dome cavity (103) such that a vertical build direction is parallel with a center axis of the dome cavity (103) and/or aligned with each second channel (107) to build the transition structure (100; 200) without support structure.

## Patentansprüche

1. Wärmetauschersammelrohr (300; 400), umfassend eine Übergangskonstruktion (100; 200), wobei die Übergangskonstruktion (100; 200) umfasst:
mindestens einen ersten Kanal (105);
eine Vielzahl von zweiten Kanälen (107), die eine andere Anzahl als der mindestens eine erste Kanal (105) aufweisen; und
einen Körper (101), der einen Kuppelhohlraum (103) definiert, der konfiguriert ist, um eine Strömung zwischen dem mindestens einen ersten Kanal (105) und der Vielzahl von zweiten Kanälen (107) überzuleiten, wobei der mindestens eine erste Kanal ein einzelner erster Kanal (105) in Fluidverbindung mit dem Kuppelhohlraum (103) ist, und der einzelne erste Kanal (105) einen Innendurchmesser aufweist, der gleich dem Durchmesser des Kuppelhohlraums (103) ist,
**dadurch gekennzeichnet, dass** der Kuppelhohlraum (103) hemisphärisch ist.

2. Sammelrohr (300; 400) nach Anspruch 1, wobei die Vielzahl von zweiten Kanälen zwei oder mehr zweite Kanäle (107) ist, wobei jeder Kanal (107) eine zweite Kanalöffnung (109) in Fluidverbindung mit dem Kuppelhohlraum (103) aufweist.

3. Sammelrohr (300; 400) nach Anspruch 2, wobei die Vielzahl von zweiten Kanälen (107) neun zweite Kanäle (107) beinhaltet.

4. Sammelrohr (300; 400) nach Anspruch 3, wobei die neun zweiten Kanäle (107) in einem Drei-mal-Drei-Quadrat angeordnet sind.

5. Sammelrohr (300; 400) nach einem der Ansprüche 2 bis 4, wobei sich jeder zweite Kanal (107) von dem Körper (101) erstreckt und parallel zu den anderen zweiten Kanälen (107) werden.

6. Sammelrohr (300; 400) nach einem der Ansprüche 2 bis 5, wobei jede zweite Kanalöffnung (109) eine Mittelachse definiert, die koinzident mit einem Mittelpunkt des Kuppelhohlraums (103) ist.

7. Sammelrohr (300; 400) nach einem der vorhergehenden Ansprüche, wobei die eine oder mehreren Übergangskonstruktionen eine Vielzahl von Übergangskonstruktionen (100; 200) beinhaltet.

8. Sammelrohr (300; 400) nach Anspruch 7, wobei die Vielzahl von Übergangskonstruktionen (100; 200) eine Vielzahl von aufeinanderfolgenden Übergangskonstruktionen (100; 200) von abnehmender Größe in Richtung einer Kernrichtung beinhaltet, wobei ein Kuppelhohlraum (103) einer kleineren Übergangskonstruktion in Fluidverbindung mit einem eines jeweiligen zweiten Kanals (107) einer größeren Übergangskonstruktion steht.

9. Verfahren zum additiven Fertigen eines Wärmetauschersammelrohrs (300, 400), das eine Übergangskonstruktion (100; 200) umfasst, wobei das Verfahren umfasst:
Bauen der Übergangskonstruktion (100; 200), die einen Körper (101) umfasst, der einen Kuppelhohlraum (103) definiert, der konfiguriert ist, um eine Strömung zwischen mindestens einem ersten Kanal (105) und einer Vielzahl von zweiten Kanälen (107) überzuleiten, die eine andere Anzahl als der mindestens eine erste Kanal (105) aufweisen,
**dadurch gekennzeichnet, dass**:
der Kuppelhohlraum (103) hemisphärisch ist, der mindestens eine erste Kanal ein einzelner erster Kanal (105) in Fluidverbindung mit dem Kuppelhohlraum (103) ist und der einzelne erste Kanal (105) einen Innendurchmesser aufweist, der gleich dem Durchmesser des Kuppelhohlraums (103) ist.

10. Verfahren nach Anspruch 9, wobei das Bauen der Übergangskonstruktion (100; 200) das Bauen des Kuppelhohlraums (103) beinhaltet, so dass eine vertikale Baurichtung parallel zu einer Mittelachse des Kuppelhohlraums (103) und/oder mit jedem zweiten Kanal (107) ausgerichtet ist, um die Übergangskonstruktion (100; 200) ohne Stützkonstruktion zu bauen.

## Revendications

1. Collecteur d'échangeur de chaleur (300 ; 400) comprenant une structure de transition (100 ; 200), la structure de transition (100 ; 200) comprenant:
au moins un premier canal (105);
une pluralité de deuxièmes canaux (107) ayant un nombre différent de celui de l'au moins un premier canal (105) ; et
un corps (101) définissant une cavité en dôme (103) qui est configurée pour faire transiter un écoulement entre l'au moins un premier canal (105) et la pluralité de deuxièmes canaux (107), dans lequel au moins un premier canal est un premier canal unique (105) en communication fluidique avec la cavité en dôme (103), et le premier canal unique (105) a un diamètre intérieur qui est le même que le diamètre de la cavité en dôme (103),
**caractérisé en ce que** la cavité en dôme (103) est hémisphérique.

2. Collecteur (300 ; 400) selon la revendication 1, dans lequel la pluralité de deuxièmes canaux est constituée de deux ou plusieurs deuxièmes canaux (107), chaque canal (107) ayant une ouverture de deuxième canal (109) en communication fluidique avec la cavité en dôme (103).

3. Collecteur (300 ; 400) selon la revendication 2, dans lequel la pluralité de deuxièmes canaux (107) comporte neuf deuxièmes canaux (107).

4. Collecteur (300 ; 400) selon la revendication 3, dans lequel les neuf deuxièmes canaux (107) sont agencés en un carré de trois par trois.

5. Collecteur (300 ; 400) selon l'une quelconque des revendications 2 à 4, dans lequel chaque deuxième canal (107) s'étend depuis le corps (101) et devient parallèle aux autres deuxièmes canaux (107).

6. Collecteur (300 ; 400) selon l'une quelconque des revendications 2 à 5, dans lequel chaque ouverture de deuxième canal (109) définit un axe central qui coïncide avec un point central de la cavité en dôme (103).

7. Collecteur (300 ; 400) selon l'une quelconque des revendications précédentes, dans lequel la structure de transition comportent une pluralité de structures de transition (100 ; 200).

8. Collecteur (300 ; 400) selon la revendication 7, dans lequel la pluralité de structures de transition (100 ; 200) comporte une pluralité de structures de transition successives (100 ; 200) de taille décroissante vers une direction de noyau, dans lequel une cavité en dôme (103) d'une structure de transition plus petite est en communication fluidique avec l'un d'un deuxième canal (107) respectif d'une structure de transition plus grande.

9. Procédé de fabrication additive d'un collecteur d'échangeur de chaleur (300, 400) comprenant une structure de transition (100 ; 200), le procédé comprenant:
la construction de la structure de transition (100 ; 200) comprenant un corps (101) définissant une cavité en dôme (103) qui est configurée pour faire transiter un écoulement entre au moins un premier canal (105) et une pluralité de deuxièmes canaux (107) ayant un nombre différent de celui de l'au moins un premier canal (105),
**caractérisé en ce que**:
la cavité en dôme (103) est hémisphérique, l'au moins un premier canal est un premier canal unique (105) en communication fluidique avec la cavité en dôme (103), et le premier canal unique (105) a un diamètre intérieur qui est le même que le diamètre de la cavité en dôme (103).

10. Procédé selon la revendication 9, dans lequel la construction de la structure de transition (100 ; 200) comporte la construction de la cavité en dôme (103) de sorte qu'une direction de construction verticale soit parallèle à un axe central de la cavité en dôme (103) et/ou alignée avec chaque deuxième canal (107) pour construire la structure de transition (100 ; 200) sans structure de support.
